# EUROPÄISCHE PATENTSCHRIFT

(11) **EP 1 291 079 B1**
(45) Veröffentlichungstag und Bekanntmachung des Hinweises auf die Patenterteilung: **01.03.2006**
(21) Anmeldenummer: 02017965.1
(22) Anmeldetag: 10.08.2002
(51) Int. Cl.: B01J 19/26, C01B 3/36, B01F 5/04, B01F 5/06, F23C 5/02, F23M 5/02, F23C 7/00, F23D 11/40, F23D 11/38

(54) **Vorrichtung zum Einbringen eines Brennstoff/Luft-Gemisches in einen Brenner und Verfahren zur Montage einer solchen Vorrichtung**
Apparatus for feeding an air-fuel mixture in a combustion engine and method for mounting such an arragement
Appareil d'allimentation d'un mélange air-carburant dans un brùleur et procédé de montage d' un tel brùleur

(30) Priorität: 10.09.2001 DE 10144400
(43) Veröffentlichungstag der Anmeldung: 12.03.2003
(73) Patentinhaber: Webasto AG, 82131 Stockdorf (DE)
(72) Erfinder: Neumüller, Markus, 82229 Hechendorf (DE); Bäcker, Christian, 82256 Fürstenfeldbruck (DE); Sallinger, Christine, 85716 Unterschleissheim (DE); Wolf, Felix, 86157 Augsburg (DE); Kunz, Stefan, 80796 München (DE); Metz, Florian, 86415 Mering (DE); Miklos, Sybille, 82327 Tutzing (DE); Wegner, Martin, 17034 Neubrandenburg (DE)
(74) Vertreter: Schumacher & Willsau

(56) Entgegenhaltungen:
- FR-A- 1 066 117
- FR-A- 2 226 055
- US-A- 4 125 359

## Beschreibung

Die Erfindung betrifft eine Vorrichtung zum Einbringen eines Brennstoff/Luft-Gemisches in einen Brenner mit einer Düse, einer Brennstoffzufuhr mit Brennstoffnadel und Mitteln zum Halten der Komponenten, wobei der Brenner, die Düse und die Brennstoffzufuhr auf einer Achse angeordnet sind. Die Erfindung betrifft weiterhin ein Verfahren zur Montage einer solchen Vorrichtung.

Gattungsgemäße Düsen kommen beispielsweise in Fahrzeugheizgeräten zum Einsatz. Derartige Fahrzeugheizgeräte können zum Beispiel als Zusatzheizgeräte und/oder als Standheizungen betrieben werden.

Die in der Vorrichtung angeordnete Düse wird zum Zuführen von Verbrennungsluft verwendet, wobei aufgrund der Strömung der Verbrennungsluft flüssiger Brennstoff, beispielsweise Diesel oder Benzin, aus einer Brennstoffnadel mitgeführt und zerstäubt wird. Man erhält auf diese Weise ein Gemisch aus Verbrennungsluft und Brennstoff, welches, gegebenenfalls nach Mischung mit auf anderen Strömungswegen zugeführter Luft, verbrannt werden kann, wodurch die für den Heizbetrieb erforderliche Wärme erzeugt wird. Diese durch einen Brenner erzeugte Wärme erwärmt dann ein Wärmeträgermedium, beispielsweise Wasser oder Luft.

Bei Vorrichtungen des Standes der Technik wird die Brennstoffzufuhr im Allgemeinen über Haltebügel an die Düse geklemmt. Die Komponenten werden dann wiederum über eine Drahtfeder an einem Haltering befestigt, der mit dem Brennrohr des Brenners verschweißt ist.

Nachteilig an einer solchen Konstruktion ist, dass die Positionierung der an der Brennstoffzufuhr angeordneten Brennstoffnadel die für einen hochqualitativen Brennerbetrieb erforderlichen Toleranzen nicht einhalten kann. Ebenfalls haben die verwendeten Drahtfedern aufgrund von Temperaturwechseln eine geringe Lebensdauer. Weitere Überschreitungen von vorgegebenen Toleranzen entstehen dadurch, dass die Positionierung der Düse auf dem Hitzeschild des Brenners unvorteilhafte Schwankungsbreiten aufweisen kann. Letztlich hat dies auch Einfluss auf die Positionierung des Glühstiftes, der beispielsweise in der Düse gehalten werden kann, bezüglich des in dem Brenner einströmenden Brennstoff/Luft-Gemisches. Eine zuverlässige Positionierung des Glühstiftes ist aber im Hinblick auf ein ordnungsgemäßes Startverhalten des Brenners erwünscht.

Weitere Nachteile der Vorrichtung des Standes der Technik bestehen im Hinblick auf die Montage der Vorrichtung. Eine solche ist bei den beschriebenen Vorrichtungen nicht automatisierbar, so dass Großserien nur mit erheblichem Aufwand gefertigt werden können.

Der Erfindung liegt die Aufgabe zugrunde, eine Vorrichtung und ein Verfahren zur Verfügung zu stellen, wobei eine präzise Positionierung der einzelnen Komponenten sicher gestellt sein soll und weiterhin eine für Großserien geeignete automatische Fertigung ermöglicht wird.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung zeichnet sich dadurch aus, dass mindestens zwei axial ausgerichtete Montagebolzen vorgesehen sind, die an dem Brenner befestigt sind, dass die Düse und die Brennstoffzufuhr Positioniereinrichtungen umfassen, die mit den Montagebolzen zusammenwirken, dass die Mittel zum Halten der Komponenten mit den Montagebolzen zusammenwirken und dass der Brenner, die Düse, die Brennstoffzufuhr und die Mittel zum Halten der Komponenten axial aufeinanderfolgend angeordnet sind. Auf diese Weise orientieren sich alle Positionierungen der Komponenten an den Montagebolzen, so dass enge Toleranzen eingehalten werden können. Die Brennstoffnadel ist bezüglich der Düse äußerst genau positioniert. Ferner wird auch die Positionierung des für das Startverhalten erforderlichen Glühstiftes durch die Positionen der Montagebolzen vorgegeben. Letztlich erhält man einen stabilen Aufbau, der einen Brennerbetrieb mit hoher Qualität sicherstellt.

Die erfindungsgemäße Vorrichtung ist in vorteilhafter Weise dadurch weitergebildet, dass die Mittel zum Halten der Komponenten als Feder ausgebildet sind, die auf den Montagebolzen durch Klemmscheiben gehalten wird. Eine Befestigung mit einer derartigen Feder hat den Vorteil, dass mechanische Spannungen, insbesondere aufgrund von Temperatureffekten, ausgeglichen werden können. Bei Systemen des Standes der Technik konnten durch mechanische Spannungen unerwünscht hohe Kräfte auf den Hitzeschild des Brenners wirken, wodurch dieser letztlich verformt wurde.

Weiterhin ist in vorteilhafter Weise vorgesehen, dass die Montagebolzen an einem mit einem Brennrohr des Brenners verschweißten Hitzeschild verschweißt sind. Auf diese Weise sind die Montagebolzen in definierter Position bezüglich des Brenners fest mit diesem verbunden.

Weiterhin ist es besonders bevorzugt, dass zwischen Düse und Brenner eine Dichtung vorgesehen ist. Diese dient sowohl der thermischen Isolierung als auch der Anpassung der Düse an den Hitzeschild des Brenners.

Es ist weiterhin in vorteilhafter Weise vorgesehen, dass die Dichtung mindestens eine dem Brenner zugewandte Glimmerschicht und mindestens eine der Düse zugewandte Grafitschicht aufweist. Dies stellt die genannten vorteilhaften Eigenschaften der Dichtung in besonders zuverlässiger Weise zur Verfügung.

In einer weiteren bevorzugten Ausführungsform der vorliegenden Erfindung ist vorgesehen, dass die Mittel zum Halten des Glühstifts als schräg zur Zylinderachse verlaufende Bohrung realisiert sind. Der Glühstift muss dann zur geeigneten Positionierung lediglich in die Bohrung eingeführt werden. Ein Anschlag am Glühstift und/oder innerhalb der Bohrung sorgt dafür, dass der Glühstift bezüglich der Düse in seine optimale Position geführt wird.

Es kann weiterhin in vorteilhafter Weise vorgesehen sein, dass die Brennstoffzufuhr ein Metallgestrick aufweist. Dieses dient der Zerschlagung von Blasen im Brennstoff. Ferner wird hierdurch ein Gegendruck für einen an der Brennstoffleitung angeordneten Dämpfer zur Verfügung gestellt.

Die Erfindung besteht weiterhin in einem Verfahren zur Montage einer Vorrichtung zum Einbringen eines Brennstoff/Luft-Gemisches in einen eine Achse definierenden Brenner, welche mindestens zwei axial ausgerichtete Montagebolzen aufweist, bei dem eine Düse in axialer Richtung auf die Montagebolzen geführt wird, eine Brennstoffzufuhr in axialer Richtung auf die Montagebolzen geführt wird und Mittel zum Halten der Komponenten in axialer Richtung auf die Montagebolzen geführt werden. Ein solches Verfahren ist in besonders einfacher Weise realisierbar, da alle Komponenten in axialer Richtung zugeführt werden. Insbesondere ist das Verfahren automatisierbar, so dass große Stückzahlen in kurzer Zeit herstellbar sind.

Das Verfahren ist in vorteilhafter Weise dadurch weitergebildet, dass vor dem Führen der Düse auf die Montagebolzen eine Dichtung in axialer Richtung auf die Montagebolzen geführt wird. Die mit den oben beschriebenen Vorteilen ausgestattete Vorrichtung mit Dichtung kann somit ebenfalls in den Prozess integriert werden, insbesondere da auch die Dichtung in axialer Richtung auf die Montagebolzen geführt wird.

Das erfindungsgemäße Verfahren ist weiterhin dadurch vorteilhaft, dass als Mittel zum Halten der Komponenten eine Feder verwendet wird und dass die Feder unter Mitwirkung von Klemmscheiben, die die Feder in ihrer Endposition fixieren, kraftgesteuert auf die Montagebolzen geführt wird. Somit können im Hinblick auf die Wärme- und Temperatureigenschaften des Aufbaus innerhalb einer Serie einheitliche Voraussetzungen geschaffen werden. Vermittelt durch die Federkraft können Toleranzen aufgrund unterschiedlicher Erwärmungen der Komponenten, unterschiedlicher Endtemperaturen der Komponenten und unterschiedlicher Temperaturausdehnungskoeffizienten ausgeglichen werden.

Der Erfindung liegt die Erkenntnis zugrunde, dass ein robuster und zuverlässiger Aufbau zur Verfügung gestellt werden kann, wobei gleichzeitig ein besonders einfaches Herstellungsverfahren ermöglicht wird. Da sämtliche Komponenten des Aufbaus an Montagebolzen ausgerichtet werden, ist eine besonders genaue Positionierung der einzelnen Komponenten, insbesondere der Brennstoffnadel bezüglich der Düse und des Glühstiftes bezüglich des einströmenden Brennstoff/Luft-Gemisches möglich.

Die Erfindung wird nun mit Bezug auf die beigleitenden Zeichnungen anhand bevorzugter Ausführungsformen beispielhaft erläutert.

Es zeigt:
- Figur 1: eine teilweise geschnittene schematische Darstellung eines Heizgeräts, in dem die vorliegende Erfindung zum Einsatz kommen kann;
- Figur 2: eine teilweise geschnittene Seitenansicht einer Ausführungsform einer Düse;
- Figur 3: eine Draufsicht auf den Lufteintrittsbereich einer Düse; und
- Figur 4: eine teilweise geschnittene Ansicht einer erfindungsgemäßen Vorrichtung.

Bei der nachfolgenden Beschreibung der Zeichnungen kennzeichnen gleiche Bezugszeichen gleiche oder vergleichbare Komponenten.

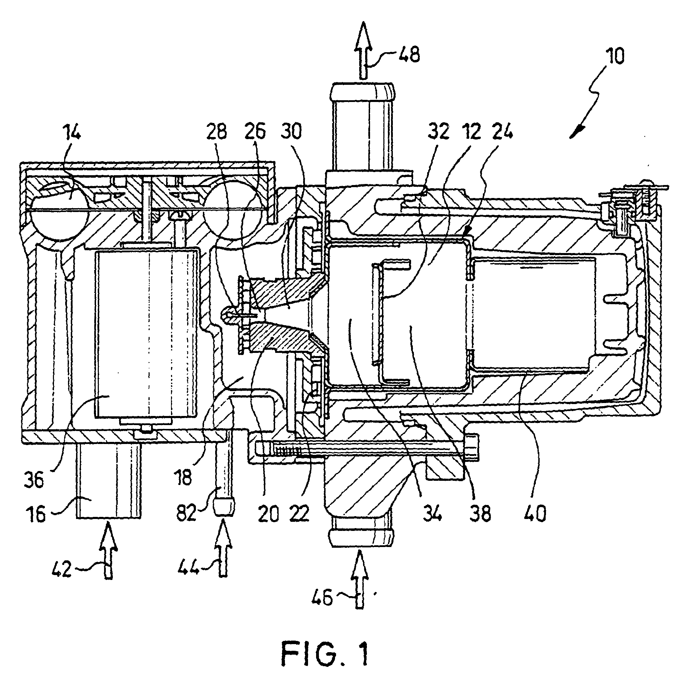

Figur 1 zeigt eine teilweise geschnittene schematische Darstellung eines Heizgeräts, in dem die vorliegende Erfindung zum Einsatz kommen kann. Es ist ein Heizgerät 10 mit einem Brenner 12 zum Verbrennen eines Brennstoffs/Luft-Gemisches dargestellt. Das Heizgerät umfasst ein Ringkanalgebläse 14 mit einem Gebläsemotor 36. Durch das Ringkanalgebläse 14 wird über einen Lufteintrittsstutzen 16 Brennluft 42 angesaugt und druckseitig in einen Brennluftsammelraum 18 eingeblasen. Die in dem Brennluftsammelraum 18 zur Verfügung stehende Brennluft wird in Primärluft und Sekundärluft unterteilt. Die Primärluft wird durch eine Düse 20, die im vorliegenden Beispiel als Venturi-Düse ausgebildet ist, in die Brennkammer 24 gefördert. Die Sekundärluft wird durch Sekundärluftbohrungen 22 in die Brennkammer 24 gefördert. Die Aufteilung der Brennluft in Primärluft und Sekundärluft ist nützlich, um am Austritt der Düse 20 ein fettes, zündwilliges Gemisch bereitzustellen.

Die Düse 20 umfasst eine Beruhigungszone 26 und einen Diffusor 30, um den Venturi-Effekt bereitzustellen. Innerhalb der Düse 20 ist eine Brennstoffnadel 28 angeordnet. Die Brennstoffnadel 28 wird über eine Brennstoffleitung 82 mit Brennstoff 44 versorgt. Aufgrund der hohen Strömungsgeschwindigkeit der Brennluft in der Beruhigungszone 26 wird der aus der Brennstoffnadel 28 annähernd drucklos austretende Brennstoff in Fäden gezogen, die dann in Tröpfchen zerfallen. Die für eine gute Zerstäubung erforderlichen hohen Luftgeschwindigkeiten lassen sich durch einen guten Druckrückgewinn des Diffusors 30 erzielen.

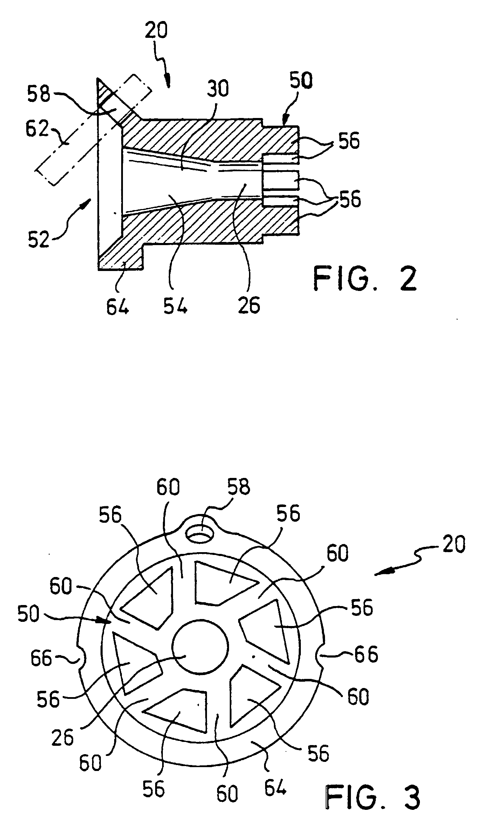

Weiterhin wird im Verlauf des Diffusors 30 die Strömungsgeschwindigkeit des Brennstoff/Luft-Gemisches drastisch reduziert, wodurch im Bereich eines in Fig. 2 angedeuteten Glühstiftes 62 geringe Strömungsgeschwindigkeiten realisiert werden. Dies unterstützt das Ausbilden und Ausbreiten einer Pilotflamme. Nach dem Startvorgang, das heißt der Zündung des Systems durch den Glühstift 62, wird der Glühstift abgeschaltet. Nachfolgend dient er unter Verwendung einer Widerstandsmessung zur Flammüberwachung.

Innerhalb der Brennkammer 24 ist eine Prallscheibe 32 angeordnet. Diese stellt ein Strömungshindernis dar, so dass die aus der Düse 20 austretende Luft nach außen gezwungen wird. Hierdurch findet eine gute Vermischung der Primärluft mit der Sekundärluft statt, was im Hinblick auf einen guten Ausbrand nützlich ist. Der Bereich zwischen Düse 20 und Prallscheibe 32 dient somit als Mischzone 34, und der Bereich jenseits der Prallscheibe 32, das heißt der bezüglich der Prallscheibe 32 stromabwärts liegende Bereich, dient als Reaktionszone 38. Das erzeugte Gemisch verbrennt im weiteren Verlauf des Brennrohres 40 und wird durch die abgasführenden Teile aus dem Heizgerät 10 geleitet. Durch die erzeugte Wärme wird eintretendes kaltes Wasser 46 im Wärmetausch mit den abgasführenden Teilen erwärmt, so dass warmes Wasser 48 aus dem Heizgerät 10 austritt. Als Wärmeträgermedium kann anstelle des Wassers beispielsweise auch Luft verwendet werden.

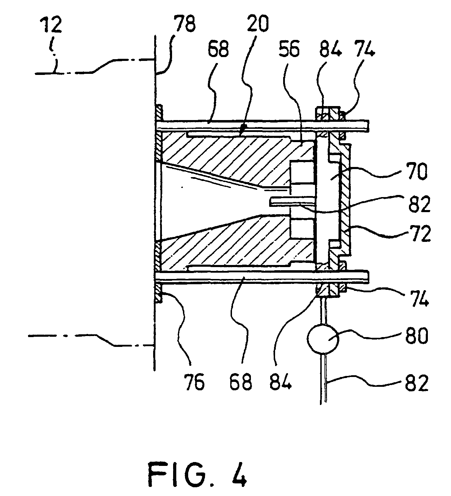

Figur 2 zeigt eine teilweise geschnittene Seitenansicht einer Ausführungsform einer Düse 20. Eine solche Düse 20 ist beispielsweise in einem Heizgerät 10, wie es in Figur 1 dargestellt ist, verwendbar. Die Düse 20 ist aus keramischem Material gefertigt, was die Herstellung der Düse 20 im Vergleich zu Metalldüsen vereinfacht. Die Düse 20 hat einen Lufteintrittsbereich 50 und einen Luftaustrittsbereich 52. Der Lufteintrittsbereich 50 ist mit dem Luftaustrittsbereich 52 über einen Strömungsweg 54 verbunden. Dieser Strömungsweg 54 ist im vorliegenden Beispiel in eine Beruhigungszone 26 und einen Diffusor 30 unterteilt. Im Lufteintrittsbereich sind Mittel 56 zur Luftführung vorgesehen. Diese Luftführungselemente 56 sind einstückig mit der Keramikdüse 20 ausgebildet. Die Luftführungselemente 56 sind so ausgerichtet, dass der zugeführten Luft ein Drall vermittelt wird, was nachfolgend mit Bezug auf Figur 3 näher erläutert wird. Im Beruhigungsbereich 26 kann eine Brennstoffnadel 28 (siehe Fig. 4) angeordnet werden, so dass aus der Düse 20 ein Gemisch von Brennstoff und Luft austritt. Dieses kann dann über einen Glühstift 62, der in eine Bohrung 58 der Düse 20 eingesetzt werden kann, entzündet werden. Die Positionierung des Glühstiftes 62 ist somit bezüglich der Düse 20 festgelegt, da der Glühstift 62 von einer Bohrung 58 der Düse 20 gehalten wird, das heißt insbesondere nicht von beliebigen anderen Bauteilen. Somit können sehr geringe Toleranzen im Hinblick auf die Einbaulage des Glühstiftes 62 eingehalten werden. Die Bohrung 58 durchsetzt in vorteilhafter Weise einen in seinem Radius vergrößerten zylindrischen Ansatz 64 der Düse 20, was den Vorteil hat, dass das Strömungsverhalten der Düse 20 nur wenig von der Bohrung 58 beziehungsweise von dem in der Bohrung 58 angeordneten Glühstift 62 beeinflusst wird.

Figur 3 zeigt eine Draufsicht auf den Lufteintrittsbereich 50 einer Düse. Es ist eine mögliche Gestaltung des Lufteintrittsbereiches 50 durch Luftführungselemente 56 dargestellt. Die Luftführungselemente 56 bilden Kanäle 60 für die einströmende Luft. Diese Kanäle 60 sind bezüglich der Radien des im Wesentlichen auf einer Achse angeordneten Aufbaus so positioniert, dass ein Versatz vorliegt. Von außen einströmende Luft erfährt somit einen Drall, was vorteilhafte Eigenschaften im Hinblick auf die Zerstäubung des Brennstoffes mit sich bringt, der aus der im Beruhigungsbereich 26 anzuordnenden Brennstoffnadel austritt. Weiterhin ist in der vorliegenden Darstellung die Anordnung der Öffnung 58 zur Aufnahme des Glühstiftes zu erkennen. Diese durchdringt einen im Wesentlichen zylinderförmigen Ansatz 64. Der Ansatz 64 ist weiterhin mit Ausnehmungen 66 versehen. Diese Ausnehmungen 66 definieren die Einbaulage der Düse 20, was nachfolgend mit Bezug auf Figur 4 näher erläutert wird.

Figur 4 zeigt eine teilweise geschnittene Ansicht einer erfindungsgemäßen Vorrichtung. Ein der Düse 20 zugewandtes Ende des Brenners 12 ist dargestellt. Der Brenner 12 ist von einem Hitzeschild 78 begrenzt. An diesem Hitzeschild 78 sind bei der vorliegenden beispielhaften Ausführungsform zwei Montagebolzen 68 vorgesehen. Diese Montagebolzen 68 können an dem Hitzeschild 78 beziehungsweise an dem Brenner 12 angeschweißt sein. Die Montagebolzen 68 definieren die Positionierung der nachfolgend beschriebenen weiteren Komponenten. Zunächst ist eine Dichtung 76 vorgesehen, die vorzugsweise aus einer Glimmerschicht und einer Grafitschicht besteht, wobei die Glimmerschicht dem Brenner 12 zugewandt ist und die Grafitschicht der Düse 20 zugewandt ist. Es folgt die Keramikdüse 20, die mit ihren in Figur 3 dargestellten Ausnehmungen 66 unverdrehbar auf den Montagebolzen 68 sitzt. Auf die Düse 20 ist eine Brennstoffzufuhr 70, die mit der Brennstoffnadel 28 in Verbindung steht, aufgesetzt. Diese Brennstoffzufuhr 70 wird mittels in einem seitlichen Flansch vorgesehenen Bohrungen 84 ebenfalls durch die Montagebolzen 68 positioniert. Die Brennstoffzufuhr 70 wird von einer Brennstoffleitung 82, in der ein Brennstoffsensor 80 angeordnet ist, mit Brennstoff versorgt. Auf die Brennstoffzufuhr 70 folgt eine Feder 72, die ebenfalls auf die Montagebolzen 68 aufgesetzt ist. Die Feder 72 wird durch Klemmscheiben 74, die auf den Montagebolzen 68 unverrückbar sitzen, gehalten. Die Feder 72 ist in einem gespannten Zustand dargestellt, in dem die Schenkel der Feder 72 beispielsweise parallel zur dazwischenliegenden Scheibe sind. Im entspannten Zustand der Feder 72 sind die Schenkel der Feder 72 nach oben in Richtung auf die dazwischenliegende Scheibe gebogen. Der in Fig. 4 nicht dargestellte Glühstift wird in Übereinstimmung mit der in Figur 2 dargestellten Ausführungsform einer Düse 20 von dieser positioniert und von einer (nicht dargestellten) Drahtfeder gehalten, die sich an der Düse 20 abstützt.

Die Brennstoffzufuhr 70 und damit die Brennstoffnadel 28 sind auf diese Weise bezüglich der Düse 20 automatisch ausgerichtet. Es sind daher nur noch zwei Bauteile beteiligt, die die Brennstoffzufuhr und die Vermischung des Brennstoffs mit der Brennluft beeinflussen, so dass sehr geringe Toleranzen eingehalten werden können, was durch die axiale Montage auf den gemeinsamen Montagebolzen 68 möglich ist. Ebenfalls kann der Glühstift 62 exakt bezüglich Düse 20 und Brenner 12 positioniert werden. Die Fertigung des in Figur 4 dargestellten Aufbaus ist voll automatisierbar. Insbesondere ist die Montagerichtung einheitlich axial, so dass lediglich ein "Auffädeln" der Bauteile 76, 20, 70, 72 und 74 durchgeführt werden muss. Die Dichtung 76 stellt eine Wärmeisolierung, eine Ankopplung der Düsenkeramik 20 an das Metall des Hitzeschildes 78 und einen Toleranzausgleich zur Verfügung. Der Aufbau kann in vorteilhafter Weise durch kraftgesteuertes Aufpressen der Klemmscheiben 74 auf die Montagebolzen 68 montiert werden, so dass im Hinblick auf die Wärme- und Temperatureigenschaften des Aufbaus einheitliche Voraussetzungen geschaffen werden können. Vermittelt durch die Federkraft der Feder 72 können Toleranzen aufgrund unterschiedlicher Erwärmungen der Komponenten, unterschiedlicher Endtemperaturen der Komponenten und unterschiedlicher Temperaturausdehnungskoeffizienten ausgeglichen werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Heizgerät
- 12: Brenner
- 14: Ringkanalgebläse
- 16: Lufteintrittsstutzen
- 18: Brennluftsammelraum
- 20: Düse
- 22: Sekundärluftbohrung
- 24: Brennkammer
- 26: Beruhigungszone
- 28: Brennstoffnadel
- 30: Diffusor
- 32: Prallscheibe
- 34: Mischzone
- 36: Gebläsemotor
- 38: Reaktionszone
- 40: Brennrohr
- 42: Verbrennungsluft
- 44: Brennstoff
- 46: eintretendes kaltes Wasser
- 48: austretendes warmes Wasser
- 50: Lufteintrittsbereich
- 52: Luftaustrittsbereich
- 54: Strömungsweg
- 56: Luftführungselemente
- 58: Bohrung
- 60: Kanal
- 62: Glühstift
- 64: Ansatz
- 66: Ausnehmung
- 68: Montagebolzen
- 70: Brennstoffzufuhr
- 72: Feder
- 74: Klemmscheibe
- 76: Dichtung
- 78: Hitzeschild
- 80: Brennstoffsensor
- 82: Brennstoffleitung
- 84: Bohrungen (in 70)

## Patentansprüche

1. Vorrichtung zum Einbringen eines Brennstoff/Luft-Gemisches in einen Brenner (12) mit
- einer Düse,
- einer Brennstoffzufuhr (70) mit Brennstoffnadel (28) und
- Mitteln zum Halten der Komponenten,
- wobei der Brenner (12), die Düse (20) und die Brennstoffzufuhr (70) auf einer Achse angeordnet sind,
**dadurch gekennzeichnet,**
- **dass** mindestens zwei axial ausgerichtete Montagebolzen (68) vorgesehen sind, die an dem Brenner (12) befestigt sind,
- **dass** die Düse (20) und die Brennstoffzufuhr (70) Positioniereinrichtungen (66, 84) umfassen, die mit den Montagebolzen (68) zusammenwirken,
- **dass** die Mittel (72, 74) zum Halten der Komponenten mit den Montagebolzen (68) zusammenwirken und
- **dass** der Brenner (12), die Düse (20), die Brennstoffzufuhr (70) und die Mittel (72, 74) zum Halten der Komponenten axial aufeinanderfolgend angeordnet sind.

2. Vorrichtung nach Anspruch 1, **dadurch gekennzeichnet, dass** die Mittel zum Halten der Komponenten als Feder (72) ausgebildet sind, die auf den Montagebolzen (68) durch Klemmscheiben (74) gehalten wird.

3. Vorrichtung nach Anspruch 1 oder 2, **dadurch gekennzeichnet, dass** die Montagebolzen (68) an einem mit einem Brennrohr (40) des Brenners (12) verschweißten Hitzeschild (78) verschweißt sind.

4. Vorrichtung nach einem der vorhergehenden Ansprüche, **dadurch gekennzeichnet, dass** zwischen Düse (20) und Brenner (12) eine Dichtung (76) vorgesehen ist.

5. Vorrichtung nach Anspruch 4, **dadurch gekennzeichnet, dass** die Dichtung (76) mindestens eine dem Brenner (12) zugewandte Glimmerschicht und mindestens eine der Düse zugewandte Grafitschicht aufweist.

6. Vorrichtung nach einem der vorhergehenden Ansprüche, **dadurch gekennzeichnet, dass** die Mittel zum Halten des Glühstifts (62) als schräg zur Zylinderachse verlaufende Bohrung (58) realisiert sind.

7. Vorrichtung nach einem der vorhergehenden Ansprüche, **dadurch gekennzeichnet, dass** die Brennstoffzufuhr (70) ein Metallgestrick aufweist.

8. Verfahren zur Montage einer Vorrichtung zum Einbringen eines Brennstoff/Luft-Gemisches in einen eine Achse definierenden Brenner (12), welche mindestens zwei axial ausgerichtete Montagebolzen (68) aufweist, bei dem
- eine Düse (20) in axialer Richtung auf die Montagebolzen (68) geführt wird,
- eine Brennstoffzufuhr (70) in axialer Richtung auf die Montagebolzen (68) geführt wird und
- Mittel zum Halten der Komponenten in axialer Richtung auf die Montagebolzen (68) geführt werden.

9. Verfahren nach Anspruch 8, **dadurch gekennzeichnet, dass** vor dem Führen der Düse auf die Montagebolzen (68) eine Dichtung (76) in axialer Richtung auf die Montagebolzen (68) geführt wird.

10. Verfahren nach Anspruch 8 oder 9, **dadurch gekennzeichnet,**
- **dass** als Mittel zum Halten der Komponenten eine Feder (72) verwendet wird und
- **dass** die Feder (72) unter Mitwirkung von Klemmscheiben (74), die die Feder (72) in ihrer Endposition fixieren, kraftgesteuert auf die Montagebolzen (68) geführt wird.

## Claims

1. Apparatus for feeding a fuel-air mixture into a burner (12), comprising
- a nozzle,
- a fuel feed (70) with fuel needle (28) and
- means for holding the components,
- the burner (12), the nozzle (20) and the fuel feed (70) being arranged on an axis,
**characterized**
- **in that** at least two axially aligned mounting pins (68) are provided, which are fixed to the burner (12),
- **in that** the nozzle (20) and the fuel feed (70) comprise positioning devices (66, 84) which interact with the mounting pins (68),
- **in that** the means (72, 74) for holding the components interact with the mounting pins (68), and
- **in that** the burner (12), the nozzle (20), the fuel feed (70) and the means (72, 74) for holding the components are arranged to follow one another axially.

2. Apparatus according to Claim 1, **characterized in that** the means for holding the components are formed as a spring (72), which is retained on the mounting pins (68) by clamping discs (74).

3. Apparatus according to Claim 1 or 2, **characterized in that** the mounting pins (68) are welded to a heat shield (78) welded to a burner pipe (40) of the burner (12).

4. Apparatus according to one of the preceding claims, **characterized in that** a seal (76) is provided between nozzle (20) and burner (12).

5. Apparatus according to Claim 4, **characterized in that** the seal (76) has at least one mica layer facing the burner (12) and at least one graphite layer facing the nozzle.

6. Apparatus according to one of the preceding claims, **characterized in that** the means for holding the glow pin (62) are implemented as a bore (58) running obliquely with respect to the cylinder axis.

7. Apparatus according to one of the preceding claims, **characterized in that** the fuel feed (70) has a metal knit.

8. Method for mounting an apparatus for feeding a fuel-air mixture into a burner (12) defining an axis, which has at least two axially aligned mounting pins (68), in which
- a nozzle (20) is guided onto the mounting pins (68) in the axial direction,
- a fuel feed (70) is guided onto the mounting pins (68) in the axial direction, and
- means for holding the components in the axial direction are guided onto the mounting pins (68).

9. Method according to Claim 8, **characterized in that**, before the nozzle is guided onto the mounting pins (68), a seal (76) is guided onto the mounting pins (68) in the axial direction.

10. Method according to Claim 8 or 9, **characterized**
- **in that** the means used for holding the components is a spring (72), and
- **in that** the spring (72) is guided onto the mounting pins (68) under force control with the participation of clamping discs (74) which fix the spring (72) in its end position.

## Revendications

1. Dispositif d'alimentation d'un mélange air-carburant dans un brûleur (12) avec
- un gicleur,
- une unité d'alimentation en carburant (70) avec une aiguille de dosage de carburant (28) et
- des moyens pour fixer les composants,
- le brûleur (12), le gicleur (20) et l'unité d'alimentation en carburant (70) étant disposés sur un même axe,
**caractérisé**
- **en ce que** sont prévues au moins deux broches de montage (68) qui sont orientées dans le sens axial et qui sont fixées sur le brûleur (12),
- **en ce que** le gicleur (20) et l'unité d'alimentation en carburant (70) comprennent des dispositifs de positionnement (66, 84) qui sont en interaction avec les broches de montage (68),
- **en ce que** les moyens (72, 74) pour fixer les composants sont en interaction avec les broches de montage (68) et
- **en ce que** le brûleur (12), le gicleur (20), l'unité d'alimentation en carburant (70) et les moyens (72, 74) pour fixer les composants sont disposés les uns derrière les autres dans le sens axial.

2. Dispositif selon la revendication 1, **caractérisé en ce que** les moyens pour fixer les composants sont configurés comme ressort (72), lequel est fixé sur les broches de montage (68) par des rondelles de serrage (74).

3. Dispositif selon la revendication 1 ou 2, **caractérisé en ce que** les broches de montage (68) sont soudées sur un bouclier thermique (78) qui est lui-même soudé sur un tube de combustion (40) du brûleur (12).

4. Dispositif selon l'une quelconque des revendications précédentes, **caractérisé en ce qu'**entre le gicleur (20) et le brûleur (12) est prévu un joint (76).

5. Dispositif selon la revendication 4, **caractérisé en ce que** le joint (76) comprend au moins une couche de mica dirigée vers le brûleur (12) et au moins une couche de graphite dirigée vers le gicleur.

6. Dispositif selon l'une quelconque des revendications précédentes, **caractérisé en ce que** les moyens pour fixer la tige thermoélectrique d'allumage (62) sont réalisés comme forure (58) s'étendant en biais par rapport à l'axe de cylindre.

7. Dispositif selon l'une quelconque des revendications précédentes, **caractérisé en ce que** l'unité d'alimentation en carburant (70) comprend un tissu métallique.

8. Procédé de montage d'un dispositif d'alimentation d'un mélange air-carburant dans un brûleur (12) qui détermine un axe, lequel dispositif comprend au moins deux broches de montage orientée dans le sens axial, dans le cas duquel procédé
- un gicleur (20) est engagé dans le sens axial sur les broches de montage (68),
- une unité d'alimentation en carburant (70) est engagée dans le sens axial sur les broches de montage (68) et
- des moyens pour fixer les composants sont engagés dans le sens axial sur les broches de montage (68).

9. Procédé selon la revendication 8, **caractérisé en ce qu'**avant l'engagement du gicleur sur les broches de montage (68) un joint (76) est engagé dans le sens axial sur les broches de montage (68).

10. Procédé selon la revendication 8 ou 9, **caractérisé**
- **en ce qu'**un ressort (72) est utilisé comme moyen pour fixer les composants et
- **en ce qu'**avec le concours de rondelles de serrage (74) qui immobilisent le ressort (72) dans sa position d'extrémité, celui-ci est engagé en force sur les broches de montage (68).
